# EUROPEAN PATENT SPECIFICATION

(11) **EP 3 305 548 B1**
(45) Date of publication and mention of the grant of the patent: **03.06.2020**
(21) Application number: 16803543.4
(22) Date of filing: 06.06.2016
(51) Int. Cl.: B60C 5/01, B60C 1/00, C08K 3/04, C08L 77/00

(54) **TIRE**
REIFEN
PNEUMATIQUE

(30) Priority: 05.06.2015 JP 2015114960; 07.12.2015 JP 2015238530
(43) Date of publication of application: 11.04.2018
(73) Proprietor: Bridgestone Corporation, Tokyo 104-8340 (JP)
(72) Inventor: YAMASHITA, Hiromasa, Tokyo 104-8340 (JP); TAKENOUCHI, Hideaki, Tokyo 104-8340 (JP); HOMMA, Masahiro, Tokyo 104-8340 (JP)
(74) Representative: Oxley, Robin John George
(86) International application number: PCT/JP2016/066808
(87) International publication number: WO 2016/195112

(56) References cited:
- WO-A1-2017/104663
- JP-A- 2010 047 124
- JP-A- 2011 246 626
- JP-A- 2012 106 668
- US-A1- 2013 056 123
- US-A1- 2013 203 889

## Description

### Technical Field

The present disclosure relates to a tire to be mounted at a rim and, in particular, to a tire in which at least a part of a tire frame (tire case) is formed from a resin material.

### Background Art

Conventionally, pneumatic tires composed of a rubber, an organic fiber material, a steel member and the like have been used in vehicles such as passenger cars. Rubber materials generally used in conventional pneumatic tires are adequate in terms of heat resistance and the like. However, the tire production process usually involves plural steps such as kneading, sheeting, molding, and vulcanization, and an improvement in productivity has been demanded.

In this regard, the use of resin materials, particularly thermoplastic resins and thermoplastic elastomers, as tire materials, has been considered in recent years from the viewpoints of weight reduction, ease of molding, and recyclability. Thermoplastic polymer materials (thermoplastic resins) have many advantages from the viewpoint of improving productivity, such as being injection-moldable.

Japanese Patent Application Laid-Open (JP-A) No. 2011-246626 proposes, as a tire using a resin material, a tire using a thermoplastic elastomer composition containing a furnace carbon black in an amount of from 1 to 15 parts by mass with respect to 100 parts by mass of an elastomer component in an air permeation preventing layer (inner liner).

### SUMMARY OF INVENTION

### Technical Problem

Tires using a thermoplastic polymer material (thermoplastic resin) can be produced more easily and at lower cost than conventional rubber tires.

However, the surfaces of thermoplastic resins deteriorate under exposure to light and UV irradiation (wavelength = 300 nm to 400 nm), for example, causes deterioration of the thermoplastic resin surface in some cases. In order to also suppress strength reduction (e.g., breaking stress, elongation at break), tires using a thermoplastic resin are required to have excellent light resistance.

In view of the above-described circumstances, an object of the present disclosure is to provide a tire which is formed using a resin material and has excellent light resistance. Solution to Problem
[1] A tire includes a circular tire frame formed from a resin material, in which the resin material contains a polyamide-based thermoplastic elastomer and carbon black, and the content of the carbon black is more than 0% and less than 1% by mass with respect to the resin material.

### Effects of Invention

According to the present disclosure, a tire, which is formed using a resin material and has excellent light resistance, can be provided.

### BRIEF DESCRIPTION OF DRAWINGS

FIG. 1A is a perspective view illustrating a cross-section of a part of a tire according to one embodiment of the present disclosure;
FIG. 1B is a cross-sectional view of a bead portion of the tire according to one embodiment of the present disclosure, which bead portion has been fitted to a rim;
FIG. 2 is a cross-sectional view taken along the tire rotation axis, which illustrates a state where a reinforcing cord is embedded in a crown portion of a tire case of a tire according to a first embodiment; and
FIG. 3 is a drawing for explaining operations of embedding the reinforcing cord in the crown portion of the tire case using a cord heating device and rollers.

### DESCRIPTION OF EMBODIMENTS

### Mode for Carrying Out the Invention

The tire of the present disclosure includes a circular tire frame formed from a resin material (i.e., formed using at least a resin material). The resin material contains a polyamide-based thermoplastic elastomer and a carbon black, and the content of the carbon black is more than 0% and less than 1% by mass with respect to the resin material.

The resin material used in the present disclosure contains, in addition to a polyamide-based thermoplastic elastomer, a carbon black in an amount of less than 1% by mass with respect to the resin material, and this enables to attain excellent light resistance.

The reason why this effect is exerted is not necessarily clear; however, it is believed that the carbon black contained in the resin material functions as a UV absorbent to absorb UV and convert it into heat energy, as a result of which cleavage of the molecular chain of the polyamide-based thermoplastic elastomer caused by UV is suppressed, and a reduction in molecular weight is thereby inhibited. It is presumed that, consequently, surface degradation, crack generation and the like are also inhibited.

In addition, it is believed that, since the use of the polyamide-based thermoplastic elastomer (TPA) as a thermoplastic resin allows the carbon black to efficiently absorb the heat generated by UV absorption and energy conversion, thermal degradation caused by heat released from the carbon black is also better inhibited as compared to a case where, for example, only polyurethane (TPU) or polyolefin (TPO) is incorporated as a thermoplastic resin.

Because of these points, according to the present disclosure, excellent light resistance can be obtained.

### -Carbon Black Content-

In the resin material used in the present disclosure, the carbon black content is more than 0% and less than 1% by mass and, when the carbon black content is higher than this range, microcracks may be generated, which leads to deterioration of the tire durability. The reason why this effect is exerted is not necessarily clear; however, with a large amount of a carbon black being contained in the resin material, the carbon black may act as nuclei to generate microcracks when a strong impact is applied, and it is believed that the tire durability is deteriorated in association with this crack generation. On the other hand, in the present disclosure, it is believed that, by controlling the carbon black content to be less than 1% by mass, the number of the nuclei is reduced and the generation of microcracks is thus inhibited, so that excellent durability can be obtained.

The upper limit of the carbon black content in the resin material is less than 1% by mass, preferably 0.5% by mass or less, more preferably 0.2% by mass or less.

Meanwhile, the lower limit is preferably not less than 0.01% by mass, more preferably not less than 0.03% by mass, particularly preferably not less than 0.05% by mass. By controlling the lower limit of the carbon black content in this range, superior light resistance can be obtained.

The range of the carbon black content in the resin material is preferably from 0.01% by mass to less than 1% by mass, more preferably from 0.05% by mass to 0.5% by mass, still more preferably from 0.05% by mass to 0.2% by mass.

### <<Resin Material>>

The tire according to the present disclosure includes a tire frame formed from a resin material. The resin material contains at least a polyamide-based thermoplastic elastomer, and contains a carbon black at the above-described content.

The resin material may also contain a thermoplastic elastomer other than the polyamide-based thermoplastic elastomer and/or an optional component(s). It is noted here that the content of the polyamide-based thermoplastic elastomer with respect to the total amount of the resin material is preferably not less than 30% by mass, more preferably not less than 50% by mass, particularly preferably not less than 70% by mass.

The term "resin" used herein is a concept that encompasses thermoplastic resins and thermosetting resins but does not include natural rubbers.

### (Polyamide-Based Thermoplastic Elastomer)

In the present disclosure, the term "polyamide-based thermoplastic elastomer" means a thermoplastic resin material of a copolymer containing: a polymer constituting a part or the entirety of a crystalline and high-melting-point hard segment; and a polymer constituting a part or the entirety of an amorphous and low-glass-transition-temperature soft segment, wherein the polymer constituting a part or the entirety of the hard segment has an amide bond (-CONH-) in its main chain.

The polyamide-based thermoplastic elastomer may be hereinafter also simply referred to as "TPA" (thermoplastic amide elastomer).

Examples of the polyamide-based thermoplastic elastomer include materials in which at least a polyamide constitutes a part or the entirety of a crystalline and high-melting-point hard segment and other polymer (e.g., a polyester or a polyether) constitutes a part or the entirety of an amorphous and low-glass-transition-temperature soft segment. Further, in the polyamide-based thermoplastic elastomer, a chain extender such as a dicarboxylic acid may be used as a binding moiety of the hard and soft segments.

### -Hard Segment-

Examples of the polyamide constituting a part or the entirety of the hard segment include polyamides that are synthesized using a monomer represented by the following Formula (1) or (2).

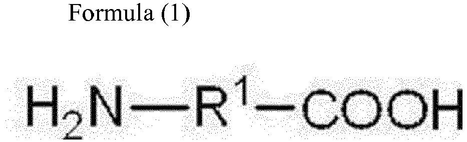

In Formula (1), R¹ represents a hydrocarbon molecular chain having from 2 to 20 carbon atoms (e.g., an alkylene group having from 2 to 20 carbon atoms).

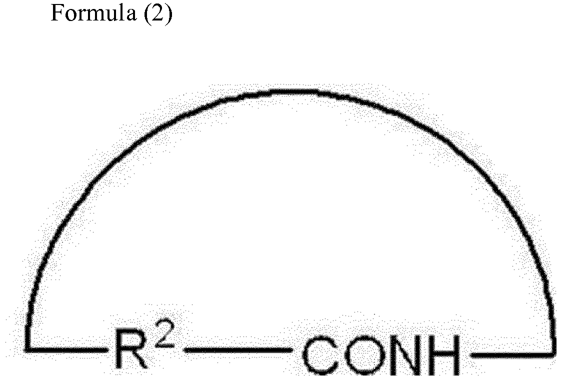

In Formula (2), R² represents a hydrocarbon molecular chain having from 3 to 20 carbon atoms (e.g., an alkylene group having from 3 to 20 carbon atoms).

In Formula (1), R¹ is preferably a hydrocarbon molecular chain having from 3 to 18 carbon atoms (e.g., an alkylene group having from 3 to 18 carbon atoms), more preferably a hydrocarbon molecular chain having from 4 to 15 carbon atoms (e.g., an alkylene group having from 4 to 15 carbon atoms), particularly preferably a hydrocarbon molecular chain having from 10 to 15 carbon atom (e.g., an alkylene group having from 10 to 15 carbon atoms). In Formula (2), R² is preferably a hydrocarbon molecular chain having from 3 to 18 carbon atoms (e.g., an alkylene group having from 3 to 18 carbon atoms), more preferably a hydrocarbon molecular chain having from 4 to 15 carbon atom (e.g., an alkylene group having from 4 to 15 carbon atoms), particularly preferably a hydrocarbon molecular chain having from 10 to 15 carbon atoms (e.g., an alkylene group having from 10 to 15 carbon atoms).

Examples of the monomer represented by Formula (1) or (2) include *ω-*aminocarboxylic acids and lactams. Examples of the polyamide constituting a part or the entirety of the hard segment include polycondensates of an *ω*-aminocarboxylic acid and a lactam, and copolycondensates of a diamine and a dicarboxylic acid.

Examples of the *ω*-aminocarboxylic acid include aliphatic ω-aminocarboxylic acids having from 5 to 20 carbon atoms, such as 6-aminocaproic acid, 7-aminoheptanoic acid, 8-aminooctanoic acid, 10-aminocapric acid, 11-aminoundecanoic acid and 12-aminododecanoic acid. Examples of the lactam include aliphatic lactams having from 5 to 20 carbon atoms, such as lauryl lactam, *ε*-caprolactam, undecanelactam, *ω*-enantholactam and 2-pyrrolidone.

Examples of the diamine include diamine compounds such as aliphatic diamines having from 2 to 20 carbon atoms (e.g., ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, 3-methylpentamethylenediamine, and meta-xylene diamine). The dicarboxylic acid can be represented by HOOC-(R³)ₘ-COOH (R³: a hydrocarbon molecular chain having from 3 to 20 carbon atoms, m: 0 or 1), and examples thereof include aliphatic dicarboxylic acids having from 2 to 22 carbon atoms, such as oxalic acid, succinic acid, glutaric acid, adipic acid, pimelic acid, suberic acid, azelaic acid, sebacic acid and dodecanedioic acid.

Examples of the polyamide constituting a part or the entirety of the hard segment include a polyamide (Polyamide 6) obtained by ring-opening polycondensation of *ε-*caprolactam, a polyamide (Polyamide 11) obtained by ring-opening polycondensation of undecanelactam, a polyamide (Polyamide 12) obtained by ring-opening polycondensation of lauryl lactam, a polyamide (Polyamide 12) obtained by polycondensation of 12-aminododecanoic acid, a polyamide (Polyamide 66) obtained by polycondensation of a diamine and a dibasic acid, and a polyamide (Amide MX) containing *meta*-xylene diamine as a structural unit.

Polyamide 6 can be represented by, for example, {CO-(CH₂)₅-NH}ₙ (wherein, n represents the number of arbitrary repeating units), and n is, for example, preferably from 2 to 100, more preferably from 3 to 50.

Polyamide 11 can be represented by, for example, {CO-(CH₂)₁₀-NH}ₙ (wherein, n represents the number of arbitrary repeating units), and n is, for example, preferably from 2 to 100, more preferably from 3 to 50.

Polyamide 12 can be represented by, for example, {CO-(CH₂)₁₁-NH}ₙ (wherein, n represents the number of arbitrary repeating units), and n is, for example, preferably from 2 to 100, more preferably from 3 to 50.

Polyamide 66 can be represented by, for example, {CO(CH₂)₄CONH(CH₂)₆NH}ₙ (wherein, n represents the number of arbitrary repeating units), and n is, for example, preferably from 2 to 100, more preferably from 3 to 50.

Amide MX containing *meta*-xylenediamine as a structural unit can be represented by, for example, the following structural unit (A-1) [wherein, n represents the number of arbitrary repeating units], and n is, for example, preferably from 2 to 100, more preferably from 3 to 50.

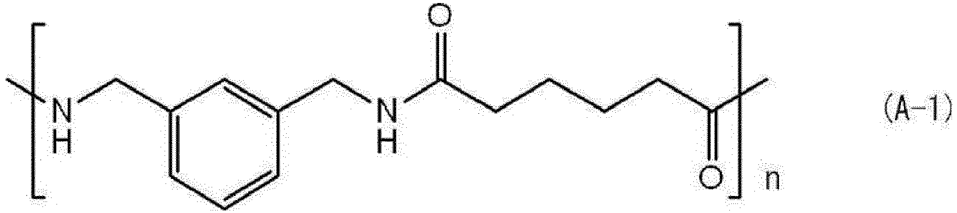

The polyamide-based thermoplastic elastomer contains, as the hard segment, preferably a polyamide (Polyamide 6) having a unit structure represented by -[CO-(CH₂)₅-NH]- or a polyamide (Polyamide 12) having a unit structure represented by -[CO-(CH₂)₁₁-NH]-, more preferably a polyamide (Polyamide 12) having a unit structure represented by - [CO-(CH₂)₁₁-NH]-.

As described above, Polyamide 12 can be obtained by ring-opening polycondensation of lauryl lactam or polycondensation of 12-aminododecanoic acid.

### -Soft Segment-

The polymer constituting a part or the entirety of the soft segment may be, for example, a polyester or a polyether. Examples thereof include polyethylene glycol, polypropylene glycol, polytetramethylene ether glycol (PTMG), and ABA-type triblock polyether. These may be used singly, or in combination of two or more thereof. Further, for example, a polyether diamine obtained by allowing ammonia or the like to react with terminals of a polyether can be used as well, and an ABA-type triblock polyether diamine or the like can be used.

Examples of the "ABA-type triblock polyether" include polyethers represented by the following Formula (3).

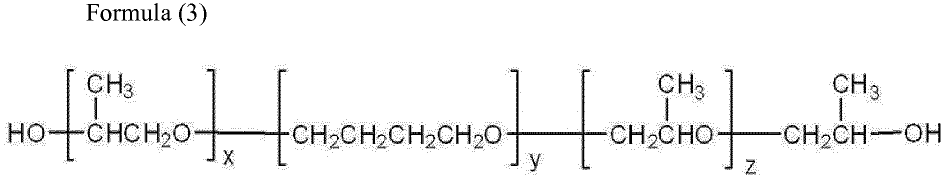

In Formula (3), each of x and z independently represents an integer from 1 to 20, and y represents an integer from 4 to 50.

In Formula (3), x and z are each preferably an integer from 1 to 18, more preferably an integer from 1 to 16, particularly preferably an integer from 1 to 14, most preferably an integer from 1 to 12. Further, in Formula (3), y is preferably an integer from 5 to 45, more preferably an integer from 6 to 40, particularly preferably an integer from 7 to 35, most preferably an integer from 8 to 30.

Examples of the "ABA-type triblock polyether diamine" include polyether diamines represented by the following Formula (N).

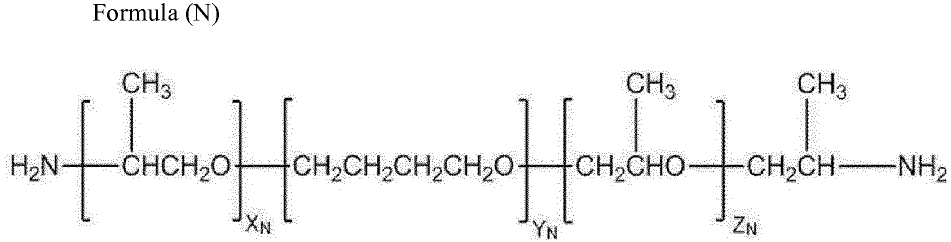

In Formula (N), each of X_{N} and Z_{N} independently represents an integer from 1 to 20, and Y_{N} represents an integer from 4 to 50.

In Formula (N), X_{N} and Z_{N} are each preferably an integer from 1 to 18, more preferably an integer from 1 to 16, particularly preferably an integer from 1 to 14, most preferably an integer from 1 to 12. Further, in Formula (N), Y_{N} is preferably an integer from 5 to 45, more preferably an integer from 6 to 40, particularly preferably an integer from 7 to 35, most preferably an integer from 8 to 30.

Examples of a combination of the hard segment and the soft segment include combinations of any of the above-described hard segments and any of the above-described soft segments. Thereamong, the following combinations are preferred.
- Combination of a ring-opening polycondensate of lauryl lactam and a polyethylene glycol
- Combination of a ring-opening polycondensate of lauryl lactam and a polypropylene glycol
- Combination of a ring-opening polycondensate of lauryl lactam and a polytetramethylene ether glycol
- Combination of a ring-opening polycondensate of lauryl lactam and an ABA-type triblock polyether
- Combination of a ring-opening polycondensate of lauryl lactam and an ABA-type triblock polyether diamine
- Combination of a polycondensate of aminododecanoic acid and a polyethylene glycol
- Combination of a polycondensate of aminododecanoic acid and a polypropylene glycol
- Combination of a polycondensate of aminododecanoic acid and a polytetramethylene ether glycol
- Combination of a polycondensate of aminododecanoic acid and an ABA-type triblock polyether
- Combination of a polycondensate of aminododecanoic acid and an ABA-type triblock polyether diamine
- Combination of a ring-opening polycondensate of *ε*-caprolactam and a polyethylene glycol
- Combination of a ring-opening polycondensate of *ε*-caprolactam and a polypropylene glycol
- Combination of a ring-opening polycondensate of *ε*-caprolactam and a polytetramethylene ether glycol
- Combination of a ring-opening polycondensate of *ε*-caprolactam and an ABA-type triblock polyether
- Combination of a ring-opening polycondensate of *ε*-caprolactam and an ABA-type triblock polyether diamine

Further, the following combinations are particularly preferred.
- Combination of a ring-opening polycondensate of lauryl lactam and an ABA-type triblock polyether
- Combination of a ring-opening polycondensate of lauryl lactam and an ABA-type triblock polyether diamine
- Combination of a polycondensate of aminododecanoic acid and an ABA-type triblock polyether
- Combination of a polycondensate of aminododecanoic acid and an ABA-type triblock polyether diamine

The polymer constituting a part or the entirety of the soft segment may also contain a diamine, such as a branched saturated diamine having from 6 to 22 carbon atoms, a branched alicyclic diamine having from 6 to 16 carbon atoms or norbornane diamine, as a monomer unit. A branched saturated diamine having from 6 to 22 carbon atoms, a branched alicyclic diamine having from 6 to 16 carbon atoms and norbornane diamine may be used singly, or in combination of two or more thereof. These diamines may also be used in combination with the above-described ABA-type triblock polyether or ABA-type triblock polyether diamine.

Examples of the branched saturated diamine having from 6 to 22 carbon atoms include 2,2,4-trimethyl-1,6-hexanediamine, 2,4,4-trimethyl-1,6-hexanediamine, 1,2-diaminopropane, 1,3-diaminopentane, 2-methyl-1,5-diaminopentane, and 2-methyl-1,8-diaminooctane.

Examples of the branched alicyclic diamine having from 6 to 16 carbon atoms include 5-amino-2,2,4-trimethyl-1-cyclopentane methylamine and 5-amino-1,3,3-trimethylcyclohexane methylamine. These diamines may be in the cis-form or the transform, or a mixture of these isomers.

Examples of the norbornane diamine include 2,5-norbornane dimethylamine, 2,6-norbornane dimethylamine, and a mixture thereof.

The polymer constituting a part or the entirety of the soft segment may further contain a diamine compound other than those described above as a monomer unit. Examples of such other diamine compound include aliphatic diamines, such as ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine and 3-methylpentamethylenediamine; alicyclic diamines, such as bis(4-aminocyclohexyl)methane, bis(4-aminocyclohexyl)propane, 1,3-bisaminomethylcyclohexane and 1,4-bisaminomethylcyclohexane; and aromatic diamines, such as *meta*-xylylenediamine and para-xylylenediamine.

These diamines may be used singly, or in combination of two or more thereof as appropriate.

### -Chain Extender-

In the polyamide-based thermoplastic elastomer, a chain extender such as a dicarboxylic acid may also be used in addition to the hard and soft segments. As the dicarboxylic acid, for example, at least one selected from aliphatic dicarboxylic acids, alicyclic dicarboxylic acids and aromatic dicarboxylic acids, or a derivative thereof, can be used.

Specific examples of the dicarboxylic acid include aliphatic dicarboxylic acids, such as linear aliphatic dicarboxylic acids having from 2 to 25 carbon atoms (e.g., adipic acid, decane dicarboxylic acid, oxalic acid, succinic acid, glutaric acid, pimelic acid, suberic acid, azelaic acid, sebacic acid and dodecanedioic acid), dimerized aliphatic dicarboxylic acids having from 14 to 48 carbon atoms, which are dimerized unsaturated fatty acids obtained by fractional distillation of triglyceride, and hydrogenation products of these aliphatic dicarboxylic acids; alicyclic dicarboxylic acids, such as 1,4-cyclohexane dicarboxylic acids; and aromatic dicarboxylic acids, such as terephthalic acid and isophthalic acid.

### -Molecular Weight-

In the present disclosure, the weight-average molecular weight of the polyamide-based thermoplastic elastomer contained in the resin material is not particularly restricted; however, it is preferably from 10,000 to 400,000. From the viewpoints of improving the fittability to a rim and improving the pressure resistance against the tire internal pressure, the weight-average molecular weight of the polyamide-based thermoplastic elastomer is more preferably from 15,700 to 300,000, still more preferably from 22,000 to 200,000.

Further, in the present disclosure, since a carbon black is contained in the resin material within the above-described content range, even if the resin material is exposed to light, a reduction in the molecular weight of the polyamide-based thermoplastic elastomer is inhibited.

The weight-average molecular weight of the polyamide-based thermoplastic elastomer can be measured by gel permeation chromatography (GPC). For GPC (gel permeation chromatography), for example, "HLC-8320GPC EcoSEC" manufactured by Tosoh Corporation can be used.

The number-average molecular weight of the polymer (polyamide) constituting a part or the entirety of the hard segment is preferably from 300 to 15,000 from the viewpoint of melt moldability. The number-average molecular weight of the polymer constituting a part or the entirety of the soft segment is preferably from 200 to 6,000 from the viewpoints of toughness and low-temperature flexibility.

### -Ratio of Hard Segment and Soft Segment-

In the polyamide-based thermoplastic elastomer, from the viewpoint of moldability, the mass ratio (x:y) of the hard segment (x) and the soft segment (y) is preferably from 50:50 to 90:10, more preferably from 50:50 to 80:20.

The content of the hard segment in the polyamide-based thermoplastic elastomer is preferably from 5 to 95% by mass, more preferably from 10 to 90% by mass, particularly preferably from 15 to 90% by mass, with respect to the total amount of the polyamide-based thermoplastic elastomer.

The content of the soft segment in the polyamide-based thermoplastic elastomer is preferably from 10 to 95% by mass, more preferably from 10 to 90% by mass, with respect to the total amount of the polyamide-based thermoplastic elastomer.

When the chain extender is used, the content thereof is preferably set such that the amount of hydroxyl group or amino group of the monomer used as a raw material of the soft segment and the amount of carboxyl groups of the chain extender are substantially equimolar.

### -Synthesis of Polyamide-Based Thermoplastic Elastomer-

The polyamide-based thermoplastic elastomer can be synthesized by copolymerizing the polymer constituting a part or the entirety of the hard segment and the polymer constituting a part or the entirety of the soft segment in accordance with a known method. For example, the polyamide-based thermoplastic elastomer can be obtained by polymerizing, in a container, a monomer serving as a raw material of the hard segment (e.g., an *ω*-aminocarboxylic acid such as 12-aminododecanoic acid, or a lactam such as lauryl lactam or *ε*-caprolactam), a monomer serving as a raw material of the soft segment (e.g., the above-described ABA-type triblock polyether or ABA-type triblock polyether diamine) and a chain extender (e.g., adipic acid or decanedicarboxylic acid). Particularly, when an *ω-*aminocarboxylic acid is used as the monomer serving as a raw material of the hard segment, the polyamide-based thermoplastic elastomer can be synthesized by performing normal-pressure melt polymerization, or normal-pressure melt polymerization and then reduced-pressure melt polymerization. When a lactam is used as the monomer serving as a raw material of the hard segment, an appropriate amount of water may be allowed to co-exist, and the polyamide-based thermoplastic elastomer can be produced by a method which includes melt polymerization under a pressure of from 0.1 to 5 MPa and subsequent normal-pressure melt polymerization and/or reduced-pressure melt polymerization. These synthesis reactions can be performed in either a batch manner or a continuous manner. Further, for the above-described synthesis reactions, a batch reaction pot, a single-tank or multi-tank continuous reaction apparatus, a tubular continuous reaction apparatus and the like may be used singly, or in combination of two or more thereof as appropriate.

In the production of the polyamide-based thermoplastic elastomer, the polymerization temperature is preferably from 150 to 300°C, more preferably from 160 to 280°C. The polymerization time can be determined as appropriate in relation to the polymerization-average molecular weight of the polyamide-based thermoplastic elastomer to be synthesized and the polymerization temperature, and the polymerization time is, for example, preferably from 0.5 to 30 hours, more preferably from 0.5 to 20 hours.

In the production of the polyamide-based thermoplastic elastomer, an additive(s) may also be added as required in order to adjust the molecular weight and/or stabilize the melt viscosity in molding, and examples of the additives include monoamines and diamines, such as laurylamine, stearylamine, hexamethylenediamine and metaxylylenediamine; and monocarboxylic acids and dicarboxylic acids, such as acetic acid, benzoic acid, stearic acid, adipic acid, sebacic acid and dodecanedioic acid. These additives can be selected as appropriate within a range that does not adversely affect the effects of the present disclosure and in relation to the molecular weight, viscosity and the like of the polyamide-based thermoplastic elastomer to be obtained.

In the production of the polyamide-based thermoplastic elastomer, a catalyst may be used as required. The catalyst may be, for example, a compound containing at least one selected from the group consisting of P, Ti, Ge, Zn, Fe, Sn, Mn, Co, Zr, V, Ir, La, Ce, Li, Ca and Hf.

Examples of such a compound include inorganic phosphorus compounds, organic titanium compounds, organic zirconium compounds, and organic tin compounds.

Specific examples of the inorganic phosphorus compounds include phosphorus-containing acids, such as phosphoric acid, pyrophosphoric acid, polyphosphoric acid, phosphorous acid and hypophosphorous acid; alkali metal salts of phosphorus-containing acids; and alkaline earth metal salts of phosphorus-containing acids.

Examples of the organic titanium compounds include titanium alkoxides (e.g., titanium tetrabutoxide and titanium tetraisopropoxide).

Examples of the organic zirconium compounds include zirconium alkoxides (e.g., zirconium tetrabutoxide (also referred to as "Zr(OBu)₄" or "Zr(OC₄H₈)₄")).

Examples of the organic tin compounds include distannoxane compounds (e.g., 1-hydroxy-3-isothiocyanate-1,1,3,3-tetrabutyldistannoxane), tin acetate, dibutyl tin dilaurate, and butyl tin hydroxide oxide hydrate.

The amount of the catalyst to be added and the timing of adding the catalyst are not particularly restricted as long as the desired product can be promptly obtained.

As the polyamide-based thermoplastic elastomer, for example, the following combinations are preferred.
- Combination of a ring-opening polycondensate of lauryl lactam, a polyethylene glycol and adipic acid
- Combination of a ring-opening polycondensate of lauryl lactam, a polypropylene glycol and adipic acid
- Combination of a ring-opening polycondensate of lauryl lactam, a polytetramethylene ether glycol and adipic acid
- Combination of a ring-opening polycondensate of lauryl lactam, an ABA-type triblock polyether and adipic acid
- Combination of a ring-opening polycondensate of lauryl lactam, an ABA-type triblock polyether diamine and adipic acid
- Combination of a ring-opening polycondensate of lauryl lactam, a polyethylene glycol and a decanedicarboxylic acid
- Combination of a ring-opening polycondensate of lauryl lactam, a polypropylene glycol and a decanedicarboxylic acid
- Combination of a ring-opening polycondensate of lauryl lactam, a polytetramethylene ether glycol and a decanedicarboxylic acid
- Combination of a ring-opening polycondensate of lauryl lactam, an ABA-type triblock polyether and a decanedicarboxylic acid
- Combination of a ring-opening polycondensate of lauryl lactam, an ABA-type triblock polyether diamine and a decanedicarboxylic acid
- Combination of a polycondensate of aminododecanoic acid, a polyethylene glycol and adipic acid
- Combination of a polycondensate of aminododecanoic acid, a polypropylene glycol and adipic acid
- Combination of a polycondensate of aminododecanoic acid, a polytetramethylene ether glycol and adipic acid
- Combination of a polycondensate of aminododecanoic acid, an ABA-type triblock polyether and adipic acid
- Combination of a polycondensate of aminododecanoic acid, an ABA-type triblock polyether diamine and adipic acid
- Combination of a polycondensate of aminododecanoic acid, a polyethylene glycol and a decanedicarboxylic acid
- Combination of a polycondensate of aminododecanoic acid, a polypropylene glycol and a decanedicarboxylic acid
- Combination of a polycondensate of aminododecanoic acid, a polytetramethylene ether glycol and a decanedicarboxylic acid
- Combination of a polycondensate of aminododecanoic acid, an ABA-type triblock polyether and a decanedicarboxylic acid
- Combination of a polycondensate of aminododecanoic acid, an ABA-type triblock polyether diamine and a decanedicarboxylic acid
- Combination of a ring-opening polycondensate of *ε*-caprolactam, a polyethylene glycol and adipic acid
- Combination of a ring-opening polycondensate of *ε*-caprolactam, a polypropylene glycol and adipic acid
- Combination of a ring-opening polycondensate of *ε*-caprolactam, a polytetramethylene ether glycol and adipic acid
- Combination of a ring-opening polycondensate of *ε*-caprolactam, an ABA-type triblock polyether and adipic acid
- Combination of a ring-opening polycondensate of *ε*-caprolactam, an ABA-type triblock polyether diamine and adipic acid
- Combination of a ring-opening polycondensate of *ε*-caprolactam, a polyethylene glycol and a decanedicarboxylic acid
- Combination of a ring-opening polycondensate of *ε*-caprolactam, a polypropylene glycol and a decanedicarboxylic acid
- Combination of a ring-opening polycondensate of *ε*-caprolactam, a polytetramethylene ether glycol and a decanedicarboxylic acid
- Combination of a ring-opening polycondensate of *ε*-caprolactam, an ABA-type triblock polyether and a decanedicarboxylic acid
- Combination of a ring-opening polycondensate of *ε*-caprolactam, an ABA-type triblock polyether diamine and a decanedicarboxylic acid

Further, the following combinations are particularly preferred.
- Combination of a ring-opening polycondensate of lauryl lactam, an ABA-type triblock polyether and adipic acid
- Combination of a polycondensate of aminododecanoic acid, an ABA-type triblock polyether and adipic acid
- Combination of a polycondensate of aminododecanoic acid, an ABA-type triblock polyether diamine and a decanedicarboxylic acid
- Combination of a polycondensate of aminododecanoic acid, a polytetramethylene ether glycol and adipic acid
- Combination of a polycondensate of aminododecanoic acid, a polytetramethylene ether glycol and a decanedicarboxylic acid

As the polyamide-based thermoplastic elastomer, any combination of these preferred embodiments for which the combination of structural units, the ratio of the structural units, the molecular weight and the like are described above.

In the above-described resin material, as desired, a variety of additives, examples of which include rubbers, various fillers (e.g., silica, calcium carbonate, clay), age resistors, oils, plasticizers, colorants, weather resistant agents and reinforcing agents, may also be incorporated. The content of such additives in the resin material (tire frame) is not particularly restricted, and the additives can be used as appropriate within a range that does not impair the effects of the present disclosure. When a non-resin component(s), such as an additive(s), is/are added to the resin material, the resin component content in the resin material is preferably not less than 50% by mass, more preferably not less than 90% by mass, with respect to the total amount of the resin material. The resin component content in the resin material is the balance remaining after subtracting the total content of various additives from the total amount of the resin component(s).

### (Carbon Black)

As the carbon black contained in the resin material of the present disclosure, any conventionally known carbon black can be used.

Examples of the carbon black include furnace black, channel black, acetylene black, and thermal black. These carbon blacks may be used singly or in combination of two or more thereof, and a commercially available product may be used as well.

### • BET Specific Surface Area

The BET specific surface area (N₂) of the carbon black is preferably not less than 10 m²/g, more preferably not less than 20 m²/g, particularly preferably not less than 30 m²/g.

By controlling the BET specific surface area to be not less than the above-described lower limit value, when a strong impact is applied, the carbon black can be prevented from acting as nuclei to cause generation of microcracks.

It is noted here that the BET specific surface area is a value measured in accordance with ASTM D3037-88 by a N₂ gas adsorption method using a specific surface area measuring device.

### • Oil Absorption Amount

The oil (dibutyl phthalate) absorption amount (DBP oil absorption amount) of the carbon black is preferably 400 ml/100 g or less, more preferably 300 ml/100 g or less, still more preferably 200 ml/100 g or less, particularly preferably 150 ml/100 g or less.

By controlling the DBP oil absorption amount to be not greater than the above-described upper limit value, when a strong impact is applied, the carbon black can be prevented from acting as nuclei to cause generation of microcracks.

It is noted here that the DBP oil absorption amount is a value measured in accordance with JIS K6221 (1982) 6.1.2.A and means the amount (ml) of dibutyl phthalate absorbed per 100 g of the carbon black.

### • Particle Size

The particle size of the carbon black is preferably 500 nm or smaller, more preferably 200 nm or smaller, particularly preferably 100 nm or smaller.

By controlling the particle size to be not larger than the above-described upper limit value, when a strong impact is applied, the carbon black can be prevented from acting as nuclei to cause generation of microcracks.

It is noted here that the particle size is a value measured using a laser diffraction-type particle size distribution analyzer (MICROTRAC, FRA type) assuming that the refractive index of water is 1.33 and that of a chemical for rubber is 1.57.

### (Physical Properties of Resin Material)

Next, preferred physical properties of the resin material constituting a part or the entirety of the tire frame is described. The tire frame of the present disclosure is formed using the resin material.

The melting point (or softening point) of the resin material (tire frame) itself is usually from 100°C to 350°C, preferably from 100°C to 250°C or so and, from the viewpoint of the tire productivity, the melting point (softening point) is preferably from 120°C to 250°C or so, more preferably from 120°C to 200°C.

By using such a resin material having a melting point of from 120°C to 250°C, for example, when a tire frame is formed by fusing its segments (frame pieces), a sufficient adhesive strength is attained between the tire frame pieces even in a frame obtained by performing the fusion in an ambient temperature range of from 120°C to 250°C. Therefore, the tire of the present disclosure exhibits excellent durability during running in terms of puncture resistance, wear resistance and the like. The heating temperature is preferably higher than the melting point (or softening point) of the resin material constituting a part or the entirety of the tire frame pieces by 10°C to 150°C, more preferably 10°C to 100°C.

The resin material can be obtained by mixing its components as appropriate by a known method (e.g., melt mixing), with an addition of various additives as required.

The resin material obtained by melt mixing may be shaped and used in a pellet form as required.

The tensile strength at yield, which is defined in JIS K7113:1995, of the resin material (tire frame) itself is preferably not less than 5 MPa, more preferably from 5 MPa to 20 MPa, still more preferably from 5 MPa to 17 MPa. When the tensile strength at yield of the resin material is 5 MPa or greater, the tire is capable of enduring deformation caused by a load applied to the tire during running and the like.

The tensile elongation at yield, which is defined in JIS K7113:1995, of the resin material (tire frame) itself is preferably not less than 10%, more preferably from 10% to 70%, still more preferably from 15% to 60%. A large elastic region is provided when the tensile elongation at yield of the resin material is 10% or greater, so that the air-sealing performance can be improved.

The tensile elongation at break, which is defined in JIS K7113:1995, of the resin material (tire frame) itself is preferably not less than 50%, more preferably not less than 100%, still more preferably not less than 150%, particularly preferably not less than 200%. When the tensile elongation at break of the resin material is 50% or greater, favorable fittability to a rim can be attained and the tire can be made unlikely to rupture at collision.

The deflection temperature under load, which is defined in ISO75-2 or ASTM D648, of the resin material (tire frame) itself (under a load of 0.45 MPa) is preferably 50°C or higher, more preferably from 50°C to 150°C, still more preferably from 50°C to 130°C. With the deflection temperature under load of the resin material being 50°C or higher, deformation of the tire frame can be inhibited even when vulcanization is performed in the production of the tire.

### [First Embodiment]

A tire according to a first embodiment of the tire of the present disclosure is described below referring to the drawings.

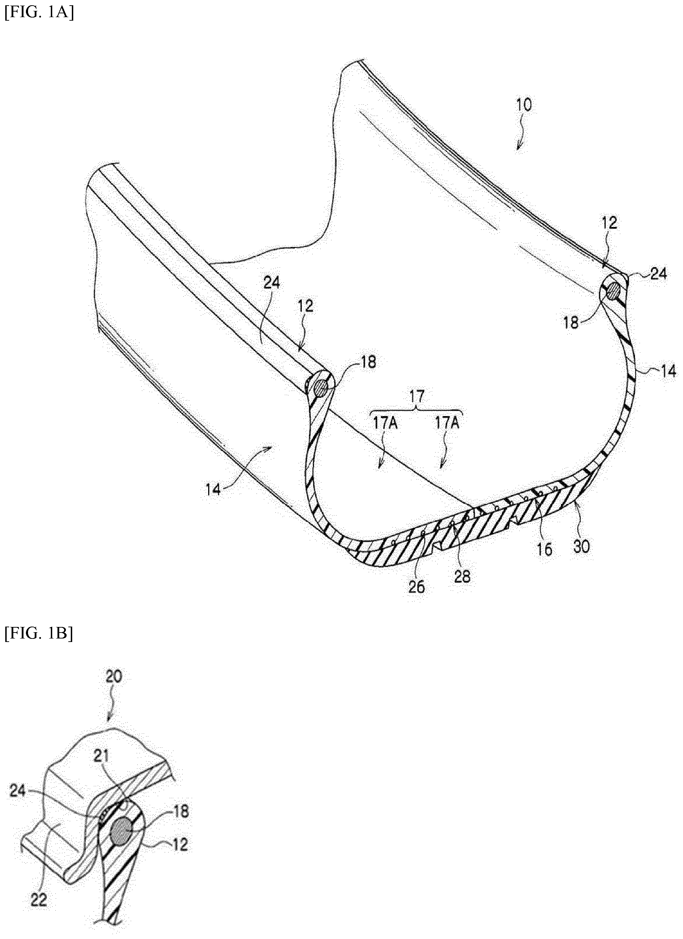

A tire 10 of this embodiment is described below. FIG. 1A is a perspective view illustrating a cross-section of a part of the tire according to one embodiment of the present disclosure. FIG. IB is a cross-sectional view of a bead portion fitted to a rim. As illustrated in FIG. 1, the tire 10 of this embodiment has a cross-sectional shape that is substantially the same as those of conventional ordinary rubber-made pneumatic tires.

As illustrated in FIG. 1A, the tire 10 includes a tire case (tire frame) 17, which contains: a pair of bead portions 12, which are each in contact with a bead sheet 21 and a rim flange 22 of a rim 20 illustrated in FIG. 1B; side portions 14, which extend on the tire radial-direction outer side from the respective bead portions 12; and a crown portion 16 (circumferential portion), which connects the tire radial-direction outer end of one side portion 14 with the tire radial-direction outer end of the other side portion 14.

In the tire case 17 of this embodiment, for example, a resin material containing a polyamide-based thermoplastic elastomer and a carbon black, in which the content of the carbon black is more than 0% and less than 1% by mass with respect to the resin material, can be used.

In this embodiment, the tire case 17 is formed from a single resin material alone; however, the present disclosure is not restricted to this configuration, and thermoplastic resin materials having different characteristics may be used for the respective parts of the tire case 17 (e.g., the side portions 14, the crown portion 16 and the bead portions 12) as in the case of a conventional ordinary rubber-made pneumatic tire. Further, a reinforcing material (e.g., polymer or metal fibers, cords, a non-woven fabric, or a woven fabric) may be embedded in the tire case 17 (e.g., the bead portions 12, the side portions 14, and the crown portion 16) so as to reinforce the tire case 17 with the reinforcing material.

The tire case 17 of this embodiment is obtained by joining together a pair of tire case half sections (tire frame pieces) 17A formed from a resin material alone. The tire case half sections 17A are each formed by integrally molding (e.g., injection molding) one bead portion 12, one side portion 14 and a half-width crown portion 16, and the resulting tire case half sections 17A having the same annular shape are aligned to face each other and joined at the tire equatorial plane to form the tire case 17. The tire case 17 is not restricted to be formed by joining two members and may be formed by joining three or more members.

The tire case half sections 17A formed from at least the above-described resin material can be molded by, for example, vacuum molding, pressure molding, injection molding or melt casting. Therefore, as compared to a conventional case of molding a tire case from a rubber, since vulcanization is not required, the production process can be greatly simplified and the molding time can be shortened.

In addition, in this embodiment, since the tire case half sections 17A have a bilaterally symmetrical shape, that is, one of the tire case half sections 17A has the same shape as the other tire case half section 17A, there is an advantage that only one type of mold is required for molding the tire case half sections 17A.

In this embodiment, as illustrated in FIG. IB, an annular bead core 18 consisting of only a steel cord, which is similar to those used in conventional ordinary pneumatic tires, is embedded in each bead portion 12. However, the present disclosure is not restricted to this configuration, and the bead core 18 may be omitted as long as the rigidity of the bead portions 12 is ensured and there is adequate in fitting the bead portions 12 with the rim 20. The bead core 18 may also be formed using, for example, an organic fiber cord, a resin-coated organic fiber cord or a hard resin, in addition to the steel cord.

In this embodiment, an annular sealing layer 24 consisting of only a material (e.g., a rubber) having superior sealing performance than the resin material constituting a part or the entirety of the tire case 17 is formed on a part of each bead portion 12 that comes into contact with the rim 20, or at least on a part of each bead portion 12 that comes into contact with the rim flange 22 of the rim 20. This sealing layer 24 may also be formed on the parts where the tire case 17 (bead portions 12) comes into contact with the bead sheet 21. As the material having superior sealing performance than the resin material constituting a part or the entirety of the tire case 17, a material softer than the resin material constituting a part or the entirety of the tire case 17 can be used. As a rubber that can be used for the sealing layer 24, it is preferred to use a rubber of the same kind as the rubbers used on the outer surfaces of the bead portions of conventional ordinary pneumatic rubber tires. Alternatively, other thermoplastic resin (thermoplastic elastomer) having superior sealing performance than the above-described resin material may be used as well. Examples of such other thermoplastic resin include resins, such as polyurethane-based resins, polyolefin-based resins, polystyrene-based resins and polyester resins; and blends of these resins with a rubber or an elastomer. It is also possible to use a thermoplastic elastomer, and examples thereof include polyester-based thermoplastic elastomers, polyurethane-based thermoplastic elastomers, polystyrene-based thermoplastic elastomers, polyolefin-based thermoplastic elastomers, combinations of these elastomers, and blends of these elastomers with a rubber.

As illustrated in FIG. 1, in the crown portion 16, a reinforcing cord 26 having higher rigidity than the resin material constituting a part or the entirety of the tire case 17 is wound in the circumferential direction of the tire case 17. In a cross-sectional view taken along the axial direction of the tire case 17, the reinforcing cord 26 is spirally wound with at least a part thereof being embedded in the crown portion 16, and forms a reinforcing cord layer 28. On the tire radial-direction outer circumferential side of the reinforcing cord layer 28, a crown 30 consisting of only a material (e.g., a rubber) having superior wear resistance than the resin material constituting a part or the entirety of the tire case 17 is arranged.

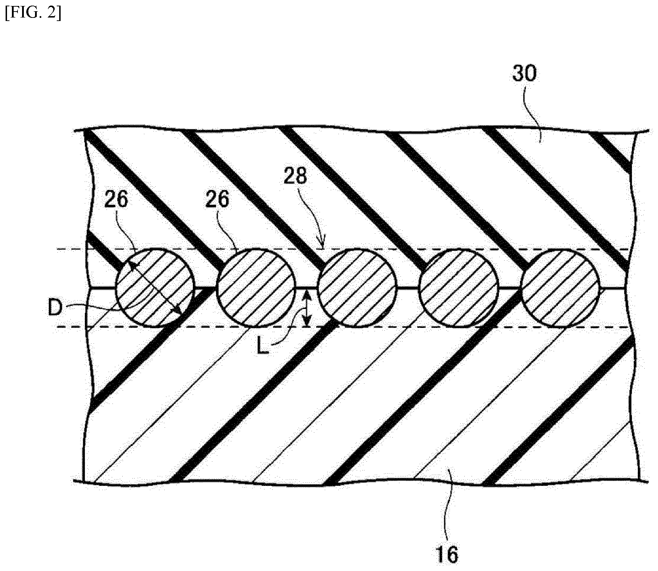

The reinforcing cord layer 28 formed by the reinforcing cord 26 is described below referring to FIG. 2. FIG. 2 is a cross-sectional view taken along the tire rotation axis, which illustrates a state where the reinforcing cord is embedded in the crown portion of the tire case of the tire according to the first embodiment. As illustrated in FIG. 2, in a cross-sectional view taken along the axial direction of the tire case 17, the reinforcing cord 26 is spirally wound with at least a part thereof being embedded in the crown portion 16, and forms the reinforcing cord layer 28, which is indicated by the part between the dashed lines in FIG. 2, together with a part of the outer circumferential portion of the tire case 17. The part of the reinforcing cord 26 that is embedded in the crown portion 16 is in close contact with the resin material constituting a part or the entirety of the crown portion 16 (tire case 17). As the reinforcing cord 26, for example, a monofilament (single strand) of metal fibers, organic fibers or the like, or a multifilament (twisted strand) in which such fibers are twisted together (e.g., a steel cord composed of twisted steel fibers), can be used. In this embodiment, a steel cord is used as the reinforcing cord 26.

In FIG. 2, the embedding depth L indicates the amount the reinforcing cord 26 embedded in the tire case 17 (crown portion 16) along the tire rotation axis direction. The embedding depth L of the reinforcing cord 26 in the crown portion 16 is preferably not less than 1/5, more preferably greater than 1/2, of the diameter D of the reinforcing cord 26. It is most preferred that the entirety of the reinforcing cord 26 is embedded in the crown portion 16. When the embedding depth L of the reinforcing cord 26 is greater than 1/2 of the diameter D of the reinforcing cord 26, the reinforcing cord 26 is unlikely to come out of the embedded portion because of the dimensions of the reinforcing cord 26. Further, when the entirety of the reinforcing cord 26 is embedded into the crown portion 16, since the surface (outer circumferential surface) is made flat, entry of air to the periphery of the reinforcing cord 26 can be inhibited even if a member is placed on the crown portion 16 where the reinforcing cord 26 is embedded. The reinforcing cord layer 28 corresponds to a belt arranged on the outer circumferential surface of a carcass of a conventional rubber-made pneumatic tire.

As described above, the crown 30 is arranged on the tire radial-direction outer circumferential side of the reinforcing cord layer 28. As the rubber used for this crown 30, it is preferred to use a rubber of the same kind as the rubbers used in conventional rubber-made pneumatic tires. In place of the crown 30, a crown formed from other kind of resin material having superior wear resistance than the resin material constituting a part or the entirety of the tire case 17 may be used as well. On the surface of the crown 30 that comes into contact with the road surface, a crown pattern constituted by plural grooves is formed in the same manner as in conventional rubber-made pneumatic tires.

A method of producing the tire of this embodiment is described below.

### (Tire Case Molding Step)

First, tire case half sections are formed using a resin material containing the above-described polyamide-based thermoplastic elastomer as described above. The formation of these tire case half sections is preferably performed by injection molding. Next, the tire case half sections each supported on a thin metal support ring are aligned to face each other. Subsequently, a joining mold (not illustrated) is placed in such a manner that it comes into contact with the outer circumferential surfaces of the abutting parts of the tire case half sections. The joining mold is configured in such a manner to press the peripheries of the joining parts (abutting parts) of the tire case half sections 17A with a prescribed pressure. Then, the peripheries of the joining parts of the tire case half sections are pressed at a temperature of not lower than the melting point (or softening point) of the resin material constituting a part or the entirety of the resulting tire case. When the joining parts of the tire case half sections are heated and pressurized by the joining mold, the joining parts are melted and the tire case half sections are fused together, as a result of which these members are integrated to form the tire case 17. In this embodiment, the joining parts of the tire case half sections are heated using the joining mold; however, the present disclosure is not restricted to this mode, and the tire case half sections may also be joined together by, for example, heating the joining parts using a separately arranged high-frequency heater or the like, or softening or melting the joining parts in advance by irradiation with hot air, infrared radiation or the like, and subsequently applying a pressure to the joining parts using a joining mold.

### (Reinforcing Cord Member Winding Step)

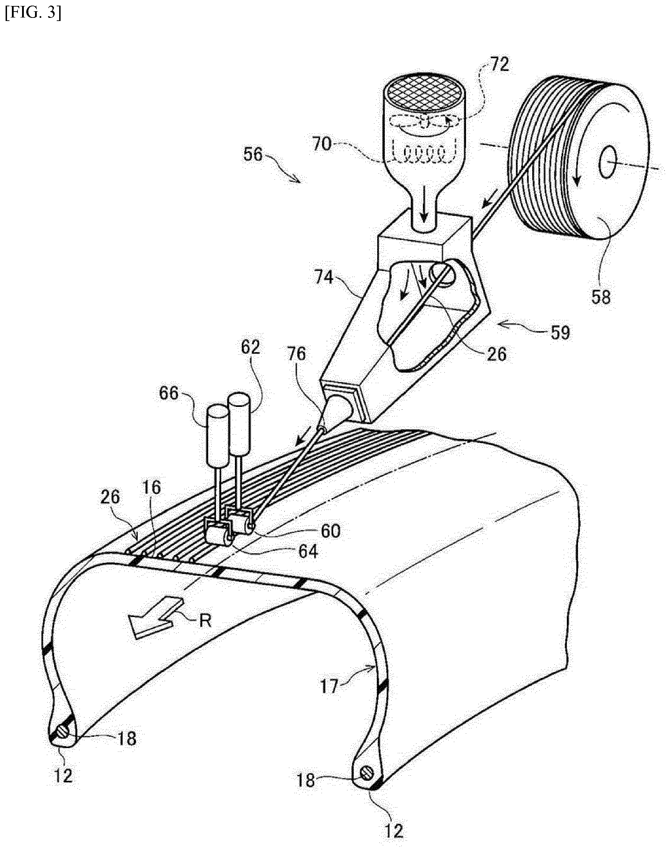

The reinforcing cord member winding step is described below referring to FIG. 3. FIG. 3 is a drawing for explaining operations of embedding a reinforcing cord in the crown portion of the tire case using a cord heating device and rollers. In FIG. 3, a cord feeding apparatus 56 includes: a reel 58, on which the reinforcing cord 26 is wound; a cord heating device 59, which is arranged on the cord transfer direction downstream side of the reel 58; a first roller 60, which is arranged on the reinforcing cord 26 transfer direction downstream side; a first cylinder device 62, which moves the first roller 60 in a direction towards or away from the tire outer circumferential surface; a second roller 64, which is arranged on the reinforcing cord 26 transfer direction downstream side of the first roller 60; and a second cylinder device 66, which moves the second roller 64 in a direction towards or away from the tire outer circumferential surface. The second roller 64 can be utilized as a cooling roller made of a metal. Further, in this embodiment, the surface of the first roller 60 and that of the second roller 64 are coated with a fluororesin (in this embodiment, TEFLON (registered trademark)) so as to inhibit adhesion of the melted or softened resin material. In this embodiment, the cord feeding apparatus 56 is configured to have two rollers, which are the first roller 60 and the second roller 64; however, the present disclosure is not restricted to this configuration, and the cord feeding apparatus 56 may be configured to have only one of these rollers (i.e., a single roller).

The cord heating device 59 includes a heater 70 and a fan 72, which generate hot air. In addition, the cord heating device 59 further includes: a heating box 74, to which hot air is supplied and in which the reinforcing cord 26 passes through the inner space; and a discharge outlet 76, through which the thus heated reinforcing cord 26 is discharged.

In this step, first, the temperature of the heater 70 of the cord heating device 59 is increased, and the ambient air heated by the heater 70 is sent to the heating box 74 by an air flow generated by rotation of the fan 72. Then, the reinforcing cord 26 drawn from the reel 58 is transferred into the heating box 74 whose inner space has been heated with hot air, whereby the reinforcing cord 26 is heated (for example, the temperature of the reinforcing cord 26 is increased to 100°C to 200°C or so). The thus heated reinforcing cord 26 passes through the discharge outlet 76 and is then spirally wound with a constant tension on the outer circumferential surface of the crown portion 16 of the tire case 17 rotating in the direction of arrow R as illustrated in FIG. 3. Here, once the heated reinforcing cord 26 comes into contact with the outer circumferential surface of the crown portion 16, the resin material of the part in contact is melted or softened, and at least a part of the heated reinforcing cord 26 is embedded in the outer circumferential surface of the crown portion 16. In this process, since the heated reinforcing cord 26 is embedded into the melted or softened resin material, a state where there is no gap between the resin material and the reinforcing cord 26, namely a close contact state, is created. Consequently, entry of air into the parts where the reinforcing cord 26 is embedded is inhibited. By heating the reinforcing cord 26 to a temperature higher than the melting point (or softening point) of the resin material of the tire case 17, the melting or softening of the resin material in those parts in contact with the reinforcing cord 26 is facilitated. In the above-described manner, not only the reinforcing cord 26 can be easily embedded on the outer circumferential surface of the crown portion 16 but also entry of air can be effectively inhibited.

The embedding depth L of the reinforcing cord 26 can be adjusted by changing, for example, the heating temperature of the reinforcing cord 26, the tension acting on the reinforcing cord 26, and/or the pressure applied by the first roller 60. In this embodiment, the embedding depth L of the reinforcing cord 26 is set to be not less than 1/5 of the diameter D of the reinforcing cord 26. The embedding depth L of the reinforcing cord 26 is more preferably greater than 1/2 of the diameter D, and it is most preferred that the entirety of the reinforcing cord 26 is embedded.

In the above-described manner, by winding the heated reinforcing cord 26 on the outer circumferential surface of the crown portion 16 while embedding the reinforcing cord 26, the reinforcing cord layer 28 is formed on the outer circumferential side of the crown portion 16 of the tire case 17.

Next, a belt-form vulcanized crown 30 is wound for one lap on the outer circumferential surface of the tire case 17, and the crown 30 is bonded on the outer circumferential surface of the tire case 17 using an adhesive or the like. As the crown 30, for example, a precured crown used in conventionally known retreaded tires can be used. This step is equivalent to the step of bonding a precured crown on the outer circumferential surface of a base tire of a retreaded tire.

Thereafter, the sealing layer 24 consisting of only a vulcanized rubber is bonded to the bead portion 12 of the tire case 17 using an adhesive or the like, whereby the tire 10 is completed.

### (Effects)

In the tire 10 of this embodiment, since a part or the entirety of the tire case 17 is formed by a resin material which contains a polyamide-based thermoplastic elastomer and a carbon black and in which the content of the carbon black is more than 0% and less than 1% by mass, excellent light resistance can be obtained.

In addition, as compared to conventional rubber tires, the tire 10 has a simpler structure and is thus lighter in weight. Therefore, the tire 10 of this embodiment has high wear resistance and high durability. Moreover, since the tire case 17 can be injection-molded, exceptionally good productivity is attained.

In the tire 10 of this embodiment, the reinforcing cord 26 having higher rigidity than the resin material constituting a part or the entirety of the tire case 17 is spirally wound in the circumferential direction on the outer circumferential surface of the crown portion 16 of the tire case 17. Therefore, the puncture resistance, the cut resistance and the circumferential rigidity are improved in the tire 10. By the improvement in the circumferential rigidity of the tire 10, creeping of the tire case 17 partially or entirely formed from the resin material is inhibited.

In a cross-sectional view taken along the axial direction of the tire case 17 (the cross-sectional view illustrated in FIG. 1), the reinforcing cord 26 is at least partially embedded and in close contact with the resin material on the outer circumferential surface of the crown portion 16 of the tire case 17 partially or entirely formed from the resin material. Therefore, entry of air during the production is suppressed, and movement of the reinforcing cord 26 caused by an input or the like during running is inhibited. As a result, delamination and the like of the reinforcing cord 26, the tire case 17 and the crown 30 are inhibited, so that the durability of the tire 10 is improved.

By constituting the reinforcing cord layer 28 with incorporation of the resin material in this manner, the difference in hardness between the tire case 17 and the reinforcing cord layer 28 can be reduced as compared to a case where the reinforcing cord 26 is fixed with a cushion rubber. Accordingly, the reinforcing cord 26 can be fixed in even closer contact with the tire case 17. Consequently, the above-described entry of air can be effectively inhibited, and the movement of the reinforcing cord member during running can be effectively suppressed.

When the reinforcing cord 26 is a steel cord, the tire 10 is advantageous in terms of recycling property since, at the time of tire disposal, the reinforcing cord 26 can be easily separated and recovered from the resin material by heating. In addition, since the resin material has a lower loss coefficient (tan δ) than vulcanized rubber, the rolling performance of the tire can be improved by incorporating a large amount of the resin material into the reinforcing cord layer 28. The resin material is also more advantageous than vulcanized rubber in that the resin material has higher in-plane shear rigidity and provides superior steering stability and wear resistance during tire running.

As illustrated in FIG. 2, the embedding depth L of the reinforcing cord 26 is not less than 1/5 of the diameter D, so that entry of air during the production is effectively suppressed and the movement of the reinforcing cord 26 caused by an input or the like during running is further inhibited.

In addition, since the crown 30, which comes into contact with the road surface, is formed from a rubber material having superior wear resistance than the resin material constituting a part of or the entirety of the tire case 17, the tire 10 has an improved wear resistance.

Furthermore, since the circular bead core 18 consisting of only a metal material is embedded in each of the bead portions 12, the tire case 17, namely the tire 10, is firmly retained on the rim 20 in the same manner as in a conventional rubber-made pneumatic tire.

By arranging the sealing layer 24, which consists of only a rubber material having superior sealing performance than the resin material constituting a part or the entirety of the tire case 17, on the parts of the bead portions 12 that come into contact with the rim 20, the fittability between the tire 10 and the rim 20 can be further improved.

The above-described embodiment adopts a configuration in which the reinforcing cord 26 is heated and the thus heated reinforcing cord 26 melts or softens the parts of the surface of the tire case 17 that come into contact therewith; however, the present disclosure is not restricted to this configuration. For example, a configuration in which, without heating the reinforcing cord 26, the outer circumferential surface of the crown portion 16 where the reinforcing cord 26 is to be embedded is heated using a hot airflow-generating apparatus and the reinforcing cord 26 is subsequently embedded in the crown portion 16, may be adopted as well.

In the first embodiment, the heat source of the cord heating device 59 is constituted by the heater and the fan; however, the present disclosure is not restricted to this configuration, and a configuration in which the reinforcing cord 26 is directly heated by radiant heat (e.g., infrared radiation) may be adopted as well.

Further, a configuration in which those parts where the reinforcing cord 26 is embedded and the resin material is thereby melted or softened are forcibly cooled by the second roller 64 made of a metal is adopted in the first embodiment; however, the present disclosure is not restricted to this configuration. For example, a configuration in which cold air is directly blown to the parts where the resin material has been melted or softened so as to forcibly cool and solidify the melted and softened parts of the resin material may be adopted as well.

Moreover, a configuration in which the reinforcing cord 26 is heated is adopted in the first embodiment; however, for example, a configuration in which the outer circumference of the reinforcing cord 26 is coated with the same resin material as that used for the tire case 17 may be adopted as well. In this case, by heating the coating resin material along with the reinforcing cord 26 at the time of winding the coated reinforcing cord on the crown portion 16 of the tire case 17, entry of air into the crown portion 16 during the embedding process can be effectively inhibited.

From the production viewpoint, it is easy to spirally wind the reinforcing cord 26; however, for example, a method of arranging the reinforcing cord 26 discontinuously in the width direction may also be contemplated.

The tire 10 of the first embodiment is a so-called tubeless tire in which an air chamber is formed between the tire 10 and the rim 20 by fitting the bead portions 12 to the rim 20; however, the present disclosure is not restricted to this configuration, and the tire of the present disclosure may assume a complete tube shape. Further, the tire of the present disclosure may also take a mode in which a reinforcing cord member obtained by coating a cord member with a resin material is used as described in the second embodiment (FIGs. 4 and 5) of JP-A No. 2012-46030.

Thus far, modes for carrying out the present disclosure have been described referring to embodiments; however, these embodiments are merely examples, and the present disclosure can be carried out with various modifications within a range that does not depart from the scope of the claims.

### EXAMPLES

The present disclosure is described below more concretely by way of examples thereof. However, the present disclosure is not restricted thereto.

### [Examples 1 to 8 and Comparative Examples 1 and 2]

The thermoplastic elastomer and each carbon black shown in Table 1 were mixed in accordance with the respective formulations shown in Table 1 to obtain resin materials. It is noted here that the amount of each carbon black shown in Table 1 indicates the mass ratio (% by mass) with respect to each resin material.

The thus obtained resin materials were each made into a pellet, which was subsequently injection-molded at 220°C to obtain a sample piece (150 mm in length × 270 mm in width × 2.0 mm in thickness). Various measurements were performed using the thus obtained sample piece itself or a test piece punched out therefrom.

### -Evaluation-

### [Light Resistance]

Tests were performed using a xenon arc-type light resistance tester (Ci-4000, manufactured by Atlas Material Testing Technology LLC) under the following conditions.
- Irradiation intensity: 60 W/m² (irradiation intensity at a wavelength of from 300 to 400 nm)
- Black panel temperature: 65°C
- Humidity: 50%RH

The samples subjected to 800-hour and 1,200-hour irradiation tests were evaluated by performing the following evaluation tests.

The light resistance was evaluated by visual observation of the outer appearance and judged based on the presence or absence of crack generation on the sample surface. An evaluation of satisfactory "A" was given when no crack generation was observed, while an evaluation of non-satisfactory "B" was given when crack generation was observed.

### [Molecular Weight]

For the sample pieces evaluated in the tests using the above-described xenon arc-type light resistance tester, the weight-average molecular weight (Mw) was measured before the irradiation, after 800-hour irradiation and 1,200-hour irradiation using a gel permeation chromatography system (GPC, "HLC-8320GPC EcoSEC" manufactured by Tosoh Corporation).

As measurement results, Table 1 shows the molecular weight measured after irradiation (800-hour irradiation and 1,200-hour irradiation) in %, taking the molecular weight measured before the irradiation as a reference (100%). As for the molecular weight evaluation criteria, it was judged that there was no problem in performance when the molecular weight measured after the 800-hour irradiation and that measured after the 1,200-hour irradiation were within ±20% of the molecular weight measured before the irradiation (initial molecular weight).

### [Durability (Crack Resistance)]

The durability (crack resistance) was evaluated by the following evaluation test. Each sample was punched out into a JIS-3 dumbbell shape, and a test sample was prepared by making a cracking origin at the center of the sample in advance. This test sample was subjected to repeated tensile stresses (17 Hz, at a fixed strain of 11%) using a SERVOPULSER apparatus manufactured by Shimadzu Corporation, and the number of repeated tensile stresses until cracking progressed to break the sample was recorded. It was regarded as satisfactory when the number of repeated tensile stresses at break was 5,000,000 or greater.

**[Table 1]**

| | | Example | | | | | | | | Comparative Example | |
|---|---|---|---|---|---|---|---|---|---|---|---|
| | | 1 | 2 | 3 | 4 | 5 | 6 | 7 | 8 | 1 | 2 |
| Thermoplastic elastomer | | TPA | | | | | | | | | |
| Carbon black | Type | a | a | a | b | c | d | e | f | (none) | a |
| | Amount | 0.10% | 0.20% | 0.50% | 0.10% | 0.10% | 0.10% | 0.10% | 0.10% | 0% | 5% |
| Light resistance | 800-hour irradiation | A | A | A | A | A | A | A | A | A | A |
| | 1,200-hour irradiation | A | A | A | A | A | A | A | A | B | A |
| Molecular weight initial comparison (%) | before irradiation | 100 | 100 | 100 | | | | | | 100 | 100 |
| | 800-hour irradiation | 95.5 | 93.2 | 97.1 | | | | | | 70.2 | 99.3 |
| | 1,200-hour irradiation | 93.2 | 92.0 | 95.7 | | | | | | 35.6 | 97.9 |
| Durability (crack resistance) [×10,000] | | 1,040 | 500 | 500 | 1,300 | 1,600 | 1,520 | 1,600 | 1,000 | 1,700 | 300 |

The components shown in Table 1 above are as follows.
- TPA: the polyamide-based thermoplastic elastomer was prepared as follows.

To a 2 L-volume reaction vessel equipped with a stirrer, a nitrogen gas inlet and a condensed water discharge outlet, 43.7 g of 12-aminododecanoic acid (manufactured by Sigma-Aldrich, Inc.), 601 g of aminododecanolactam (lauryl lactam, manufactured by Sigma-Aldrich, Inc.) and 15.5 g of adipic acid (manufactured by Sigma-Aldrich, Inc.) were added. After sufficiently purging the inside of this vessel with nitrogen, the temperature was increased to 280°C, and the added materials were allowed to react for 4 hours under an elevated pressure of 0.6 MPa. Then, the pressure was released, and the reaction was allowed to further proceed for 1 hour under a nitrogen gas flow, whereby a nylon 12 polymer having a weight-average molecular weight of 6,000 (hard segment "PA12" having a chain extender bound to a terminal) was obtained as a white solid (polymerization reaction A).

To 250 g of the thus obtained nylon 12 polymer, 70.9 g of polyoxypropylene-polytetramethylene glycol-polyoxypropylene diamine (PPG-PTMG-PPG, manufactured by Huntsman Corporation, product name: JEFFAMINE, catalog No.: XTJ-548, weight-average molecular weight: 1,700) as a soft segment and 71 mg of tetra-*tert*-butoxy zirconium were added, and the resulting mixture was stirred at 230°C for 6 hours (polymerization reaction B). Further, 1 g of IRGANOX 1010 (manufactured by BASF, Ltd.) was added, whereby a white polyamide-based thermoplastic elastomer (TPA, weight-average molecular weight: 75,000) was obtained.

- Carbon black a: manufactured by Asahi Carbon Co., Ltd., trade name "ASAHI #70" (BET specific surface area = 77 m²/g, oil absorption amount (DBP oil absorption amount) = 101 ml/100 g, average particle size = 28 nm)
- Carbon black b: manufactured by Asahi Carbon Co., Ltd., trade name "ASAHI #15HS" (BET specific surface area = 14 m²/g, oil absorption amount (DBP oil absorption amount) = 90 ml/100 g, average particle size = 120 nm)
- Carbon black c: manufactured by Asahi Carbon Co., Ltd., trade name "SB605" (BET specific surface area = 85 m²/g, oil absorption amount (DBP oil absorption amount) = 77 ml/100 g, average particle size = 25 nm)
- Carbon black d: manufactured by Asahi Carbon Co., Ltd., trade name "ASAHI F-200" (BET specific surface area = 51 m²/g, oil absorption amount (DBP oil absorption amount) = 180 ml/100 g, average particle size = 38 nm)
- Carbon black e: manufactured by Asahi Carbon Co., Ltd., trade name "HS-500" (BET specific surface area = 39 m²/g, oil absorption amount (DBP oil absorption amount) = 380 ml/100 g)
- Carbon black f: manufactured by Asahi Carbon Co., Ltd. (BET specific surface area = 962 m²/g, oil absorption amount (DBP oil absorption amount) = 226 ml/100 g)

As seen from Table 1, in Examples where each resin material to be incorporated into a tire case contained the polyamide-based thermoplastic elastomer along with a carbon black in a range of less than 1% by mass, superior light resistance was attained as compared to Comparative Example 1 where no carbon black was incorporated. In addition, it is seen that the resin materials of Examples had superior durability (crack resistance) than the resin material of Comparative Example 2 which contained a carbon black in an amount of 1% by mass or greater.

## Claims

1. A tire (10), comprising a circular tire frame (17) formed from a resin material, wherein:
the resin material comprises a polyamide-based thermoplastic elastomer and carbon black, and
the content of the carbon black is more than 0% and less than 1% by mass with respect to the resin material.

2. The tire (10) according to claim 1, wherein the content of the carbon black in the resin material is not less than 0.01% by mass.

## Patentansprüche

1. Reifen (10), der ein kreisförmiges Reifengerüst (17) umfasst, das aus einem Harzwerkstoff geformt ist, wobei:
der Harzwerkstoff ein thermoplastisches Polymer auf Grundlage von Polyamid und Ruß umfasst und
der Gehalt des Rußes mehr als 0 % und weniger als 1 Masse-% in Bezug auf den Harzwerkstoff beträgt.

2. Reifen (10) nach Anspruch 1, wobei der Gehalt des Rußes in dem Harzwerkstoff nicht weniger als 0,01 Masse-% beträgt.

## Revendications

1. Pneu (10), comprenant une structure de pneu circulaire (17) formée d'une matière de résine, dans lequel :
la matière de résine comprend un élastomère thermoplastique à base de polyamide et du noir de carbone, et
la teneur en noir de carbone est supérieure à 0 % et inférieure à 1 % en masse par rapport à la matière de résine.

2. Pneu (10) selon la revendication 1, dans lequel la teneur en noir de carbone dans la matière de résine n'est pas inférieure à 0,01 en masse.
